(19) **Europäisches Patentamt**

**European Patent Office**

**Office européen des brevets**

(11) **EP 1 163 735 B1**

(12) **EUROPEAN PATENT SPECIFICATION**

(45) Date of publication and mention
of the grant of the patent:
**03.12.2003 Bulletin 2003/49**

(21) Application number: **00916600.0**

(22) Date of filing: **22.03.2000**

(51) Int Cl.$^7$: **H04B 7/005**

(86) International application number:
**PCT/US00/07556**

(87) International publication number:
**WO 00/057576 (28.09.2000 Gazette 2000/39)**

(54) **OUTER LOOP/WEIGHTED OPEN LOOP POWER CONTROL IN A TIME DIVISION DUPLEX COMMUNICATION SYSTEM**

LEISTUNGSREGELUNG MIT ÄUSSERER SCHLEIFE/ GEWICHTETER OFFENER SCHLEIFE IN EINEM ZEITDUPLEX-KOMMUNIKATIONSSYSTEM

COMMANDE DE PUISSANCE EN BOUCLE EXTERNE/BOUCLE OUVERTE PONDEREE DANS UN SYSTEME DE COMMUNICATIONS DUPLEX A DIVISION DANS LE TEMPS

(84) Designated Contracting States:
**AT BE CH CY DE DK ES FI FR GB GR IE IT LI LU MC NL PT SE**

(30) Priority: **22.03.1999 US 125417 P**
          **28.05.1999 US 136556 P**
          **28.05.1999 US 136557 P**

(43) Date of publication of application:
**19.12.2001 Bulletin 2001/51**

(60) Divisional application:
**03019004.5**

(73) Proprietor: **INTERDIGITAL TECHNOLOGY CORPORATION**
**Wilmington, DE 19801 (US)**

(72) Inventors:
• **ZEIRA, Ariela**
  **Trumball, CT 06611 (US)**
• **SHIN, Sung-Hyuk**
  **Fort Lee, NJ 07024 (US)**
• **DICK, Steven, G.**
  **Nesconset, NY 11767 (US)**

(74) Representative: **Henningsson, Gunnar et al**
**AWAPATENT AB,**
**Box 45086**
**104 30 Stockholm (SE)**

(56) References cited:
**EP-A- 0 462 952        EP-A- 0 610 030**
**WO-A-98/45962          US-A- 4 868 795**
**US-A- 5 542 111**

**Description**

**BACKGROUND**

This invention generally relates to spread spectrum time division duplex (TDD) communication systems. More particularly, the present invention relates to a system and method for controlling transmission power within TDD communication systems.

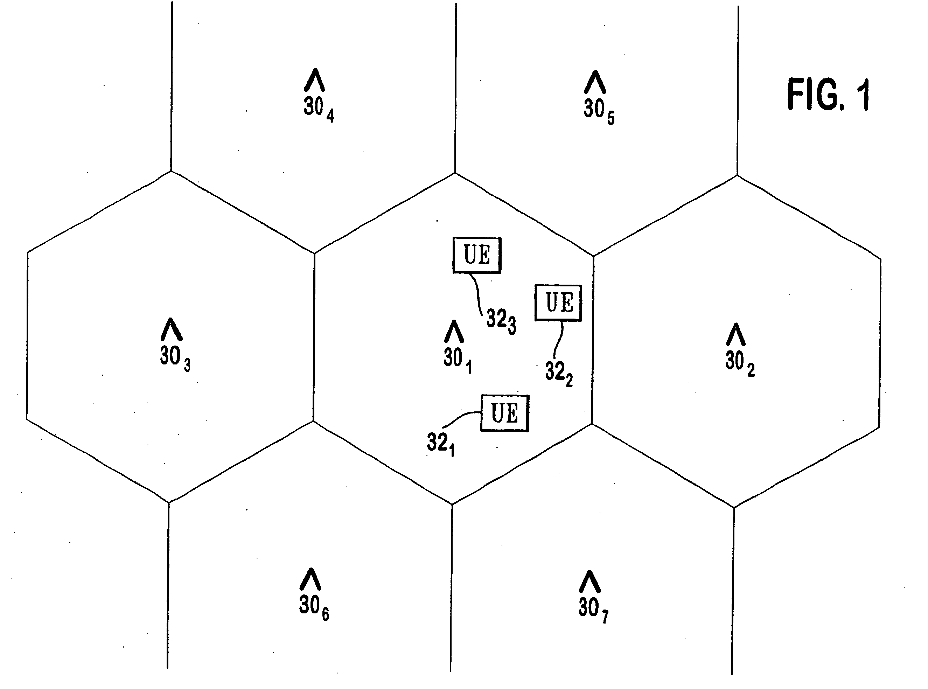

**Figure 1** depicts a wireless spread spectrum time division duplex (TDD) communication system. The system has a plurality of base stations $30_1$-$30_7$. Each base station $30_1$ communicates with user equipment (UEs) $32_1$-$32_3$ in its operating area. Communications transmitted from a base station $30_1$ to a UE $32_1$ are referred to as downlink communications and communications transmitted from a UE $32_1$ to a base station $30_1$ are referred to as uplink communications.

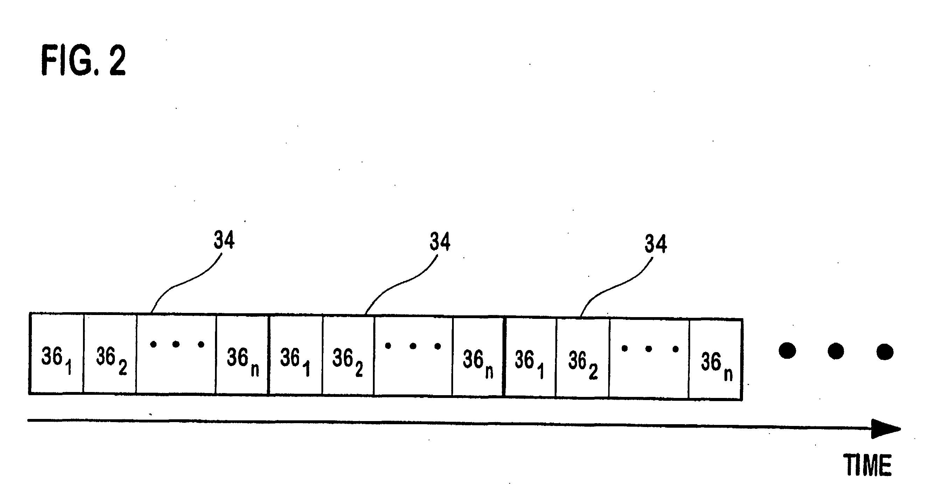

In addition to communicating over different frequency spectrums, spread spectrum TDD systems carry multiple communications over the same spectrum. The multiple signals are distinguished by their respective chip code sequences (codes). Also, to more efficiently use the spread spectrum, TDD systems as illustrated in **Figure 2** use repeating frames **34** divided into a number of time slots $36_1$-$36_n$, such as sixteen time slots. In such systems, a communication is sent in selected time slots $36_1$-$36_n$ using selected codes. Accordingly, one frame **34** is capable of carrying multiple communications distinguished by both time slot and code. The combination of a single code in a single time slot is referred to as a resource unit. Based on the bandwidth required to support a communication, one or multiple resource units are assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach using transmission power control in a code division multiple access (CDMA) communication system is described in U.S. Patent No. 5,056,109 (Gilhousen et al.). A transmitter sends a communication to a particular receiver. Upon reception, the received signal power is measured. The received signal power is compared to a desired received signal power. Based on the comparison, a control bit is sent to the transmitter either increasing or decreasing transmission power by a fixed amount. Since the receiver sends a control signal to the transmitter to control the transmitter's power level, such power control techniques are commonly referred to as closed loop.

Under certain conditions, the performance of closed loop systems degrades. For instance, if communications sent between a UE and a base station are in a highly dynamic environment, such as due to the UE moving, such systems may not be able to adapt fast enough to compensate for the changes. The update rate of closed loop power control in TDD is typically 100 cycles per second which is not sufficient for fast fading channels.

WO 98 45962 A discloses a method for controlling a transmission power level of a mobile terminal in a satellite communication system. The power control method has both a closed-loop and an open-loop element. For the closed-loop element, the base station calculates the mobile terminal's power setting based on the strength of the signals received from the mobile terminal. The base station takes into account the propagation delays of the satellite system in the power setting determination. For the open-loop element, the strength of the received signal from the base station in each frame is compared to the strength of the signal received in the previous frame. The transmit power of the mobile terminal is adjusted inversely with the variations in the observed signal strength.

U.S. Patent No. 5,542,111 discloses a method for regulating transmission power control of a mobile station using long-term and short-term transmission power control. Long-term power control occurs in a base station on the upper level forming a closed control loop. A decision authority statement is communicated from the base station to the mobile station. The short term transmission power level is determined on the lower loop using an identifier of the long term power and the decision authority.

EP-A-0 610 030 discloses a spread spectrum TDD communication system with open loop power control.

Accordingly, there is a need for alternate approaches to maintain signal quality and low transmission power levels.

**SUMMARY**

Outer loop/weighted open loop power control controls transmission power levels in a spread spectrum time division duplex communication system. At a first communication station, errors are measured in a received communication from a second communication station. Based on in part the measured errors, an adjustment in a target level is determined. The first station transmits a communication and the target adjustment to the second station. The second station measures the first station's communication's received power level. Based on in part the received power level, a path loss is determined. The target level is adjusted in response to receiving the target adjustment. The quality of the path loss is determined with respect to a subsequent communication to be transmitted from the second station. The second station's transmission power level for the subsequent communication is adjusted based on in part the determined path loss, the determined quality and the adjusted target level.

**BRIEF DESCRIPTION OF THE DRAWINGS**

**Figure 1** illustrates a prior art TDD system.
**Figure 2** illustrates time slots in repeating frames of a TDD system.
**Figure 3** is a flow chart of outer loop/weighted open loop power control.
**Figure 4** is a diagram of components of two communication stations using outer loop/weighted open loop power control.
**Figure 5** is a graph of the performance of outer loop/weighted open loop, weighted open loop and closed loop power control systems.
**Figure 6** is a graph of the three systems performance in terms of Block Error Rate (BLER).

**DETAILED DESCRIPTION OF THE PREFERRED EMBODIMENTS**

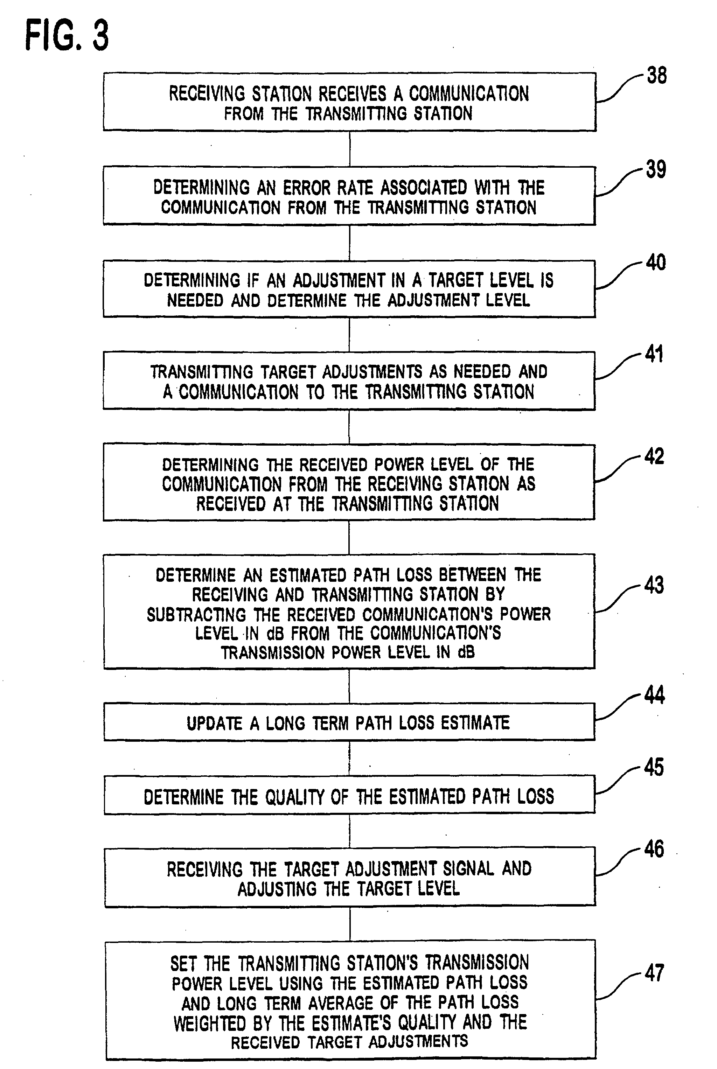

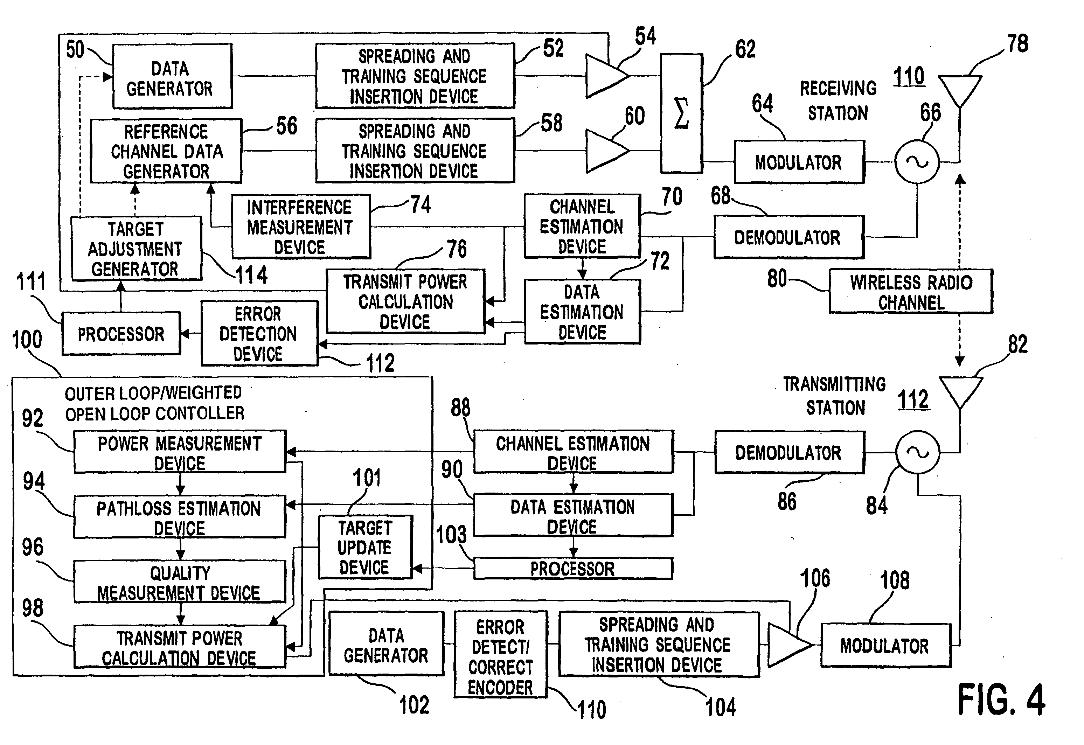

The preferred embodiments will be described with reference to the drawing figures where like numerals represent like elements throughout. Outer loop/weighted open loop power control will be explained using the flow chart of **Figure 3** and the components of two simplified communication stations **110, 112** as shown in **Figure 4**. For the following discussion, the communication station having its transmitter's power controlled is referred to as the transmitting station **112** and the communication station receiving power controlled communications is referred to as the receiving station **110**. Since outer loop/weighted open loop power control may be used for uplink, downlink or both types of communications, the transmitter having its power controlled may be associated with the base station $30_1$, UE $32_1$ or both. Accordingly, if both uplink and downlink power control are used, the receiving and transmitting station's components are associated with both the base station $30_1$ and UE $32_1$.

The receiving station **110** receives various radio frequency signals including communications from the transmitting station **112** using an antenna **78**, or alternately, an antenna array, step **38**. The received signals are passed thorough an isolator **66** to a demodulator **68** to produce a baseband signal. The baseband signal is processed, such as by a channel estimation device **70** and a data estimation device **72**, in the time slots and with the appropriate codes assigned to the transmitting station's communication. The channel estimation device **70** commonly uses the training sequence component in the baseband signal to provide channel information, such as channel impulse responses. The channel information is used by the data estimation device **72**, the interference measurement device **74**, and the transmit power calculation device **76**. The data estimation device **72** recovers data from the channel by estimating soft symbols using the channel information.

Prior to transmission of the communication from the transmitting station **112**, the data signal of the communication is error encoded using an error detection/correction encoder **110**. The error encoding scheme is typically a circular redundancy code (CRC) followed by a forward error correction encoding, although other types of error encoding schemes may be used.

Using the soft symbols produced by the data estimation device **72**, an error detection device **112** detects errors in the soft symbols. A processor **111** analyzes the detected error and determines an error rate for the received communication, step **39**. Based on the error rate, the processor **111** determines the amount, if any, a target level, such as a target signal to interference ration ($SIR_{TARGET}$), needs to be changed at the transmitting station **112, step 40**. Based on the determined amount, a target adjustment signal is generated by the target adjustment generator **114**. The target adjustment is subsequently sent to the transmitting station, step **41**. The target adjustment is signaled to the transmitting station **112**, such as using a dedicated or a reference channel.

One technique to determine the amount of adjustment in the target level uses an upper and lower threshold. If the determined error rate exceeds an upper threshold, the target level is set at an unacceptably low level and needs to be increased. A target level adjustment signal is sent indicating an increase in the target level. If the determined error rate is below a second threshold, the target level is set at an unnecessarily high level and the target level can be decreased. By reducing the target level, the transmitting station's power level is decreased reducing interference to other communications using the same time slot and spectrum. To improve performance, as soon as the error rate exceeds the upper limit, a target adjustment is sent. As a result, high error rates are improved quickly and lower error rates are adjusted slowly, such as once per 10 seconds. If the error rate is between the thresholds, a target adjustment is not sent maintaining the same target level.

Applying the above technique to a system using CRC and FEC encoding follows. Each CRC block is checked for an error. Each time a frame is determined to have an error, a counter is incremented. As soon as the counter exceeds an upper threshold, such as 1.5 to 2 times the desired block error rate (BLER), a target adjustment is sent increasing the target level. To adjust the $SIR_{TARGET}$ at the transmitting station **112**, the increase in the $SIR_{TARGET}$ is sent ($SIR_{INC}$), which is typically in a range of 0.25 dB to 4 dB. If the number of CRC frames encountered exceeds a predetermined limit, such as 1000 blocks, the value of the counter is compared to a lower threshold, such as 0.2 to 0.6 times the desired BLER. If the number of counted block errors is below the lower threshold, a target adjustment signal is sent decreasing the target level, $SIR_{DEC}$. A typical range of $SIR_{DEC}$ is 0.25 to 4 dB. The value of $SIR_{DEC}$ may be based on $SIR_{INC}$ and a target block error rate, $BLER_{TARGET}$. The $BLER_{TARGET}$ is based on the type of service. A typical range for the $BLER_{TARGET}$ is 0.1% to 10%. **Equation 1** illustrates one such approach for determining $SIR_{DEC}$.

$$SIR_{DEC} = SIR_{INC} \times BLER_{TARGET}/(1 - BLER_{TARGET}) \qquad \text{Equation 1}$$

If the count is between the thresholds for the predetermined block limit, a target adjustment signal is not sent.

Alternately, a single threshold may be used. If the error rate exceeds the threshold, the target level is increased. If the error rate is below the threshold, the target is decreased. Additionally, the target level adjustment signal may have several adjustment levels, such as from 0 dB to ±4 dB in 0.25 dB increments based on the difference between the determined error rate and the desired error rate.

The interference measurement device **74** of the receiving station **110** determines the interference level in dB, $I_{RS}$, within the channel, based on either the channel information, or the soft symbols generated by the data estimation device **72**, or both. Using the soft symbols and channel information, the transmit power calculation device **76** controls the receiving station's transmission power level by controlling the gain of an amplifier **54**.

For use in estimating the pathloss between the receiving and transmitting stations **110**,**112** and sending data, the receiving station **110** sends a communication to the transmitting station **112, step 41**. The communication may be sent on any one of the various channels. Typically, in a TDD system, the channels used for estimating pathloss are referred to as reference channels, although other channels may be used. If the receiving station **110** is a base station $30_1$, the communication is preferably sent over a downlink common channel or a common control physical channel (CCPCH). Data to be communicated to the transmitting station **112** over the reference channel is referred to as reference channel data. The reference data may include, as shown, the interference level, $I_{RS}$, multiplexed with other reference data, such as the transmission power level, $T_{RS}$. The interference level, $I_{RS}$, and reference channel power level, $T_{RS}$, may be sent in other channels, such as a signaling channel.

The reference channel data is generated by a reference channel data generator 56. The reference data is assigned one or multiple resource units based on the communication's bandwidth requirements. A spreading and training sequence insertion device **58** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier **60**. The amplified communication burst may be summed by a sum device **62** with any other communication burst created through devices, such as a data generator **50**, spreading and training sequence insertion device **52** and amplifier **54**.

The summed communication bursts are modulated by a modulator **64**. The modulated signal is passed thorough an isolator **66** and radiated by an antenna **78** as shown or, alternately, through an antenna array. The radiated signal is passed through a wireless radio channel **80** to an antenna **82** of the transmitting station **112**. The type of modulation used for the transmitted communication can be any of those known to those skilled in the art, such as direct phase shift keying (DPSK) or quadrature phase shift keying (QPSK).

The antenna **82** or, alternately, antenna array of the transmitting station **112** receives various radio frequency signals including the target adjustments. The received signals are passed through an isolator **84** to a demodulator **86** to produce a baseband signal. The baseband signal is processed, such as by a channel estimation device **88** and a data estimation device **90**, in the time slots and with the appropriate codes assigned to the communication burst of the receiving station **110**. The channel estimation device **88** commonly uses the training sequence component in the baseband signal to provide channel information, such as channel impulse responses. The channel information is used by the data estimation device **90** and a power measurement device **92**.

The power level of the processed communication corresponding to the reference channel, $R_{TS}$, is measured by the power measurement device **92** and sent to a pathloss estimation device **94, step 42**. Both the channel estimation device **88** and the data estimation device **90** are capable of separating the reference channel from all other channels.

If an automatic gain control device or amplifier is used for processing the received signals, the measured power level is adjusted to correct for the gain of these devices at either the power measurement device **92** or pathloss estimation device **94**. The power measurement device is a component of an outer loop/weighted open loop controller **100**. As shown in **Figure 4**, the outer loop/weighted open loop controller **100** comprises the power measurement device **92**, pathloss estimation device **94**, quality measurement device **94**, target update device **101**, and transmit power calculation device **98**.

To determine the path loss, L, the transmitting station **112** also requires the communication's transmitted power level, $T_{RS}$. The communication's transmitted power level, $T_{RS}$, may be sent along with the communication's data or in a signaling channel. If the power level, $T_{RS}$, is sent along with the communication's data, the data estimation device **90** interprets the power level and sends the interpreted power level to the pathloss estimation device **94**. If the receiving station **110** is a base station $30_1$, preferably the transmitted power level, $T_{RS}$, is sent via the broadcast channel (BCH) from the base station $30_1$. By subtracting the received communication's power level, $R_{TS}$, from the sent communication's transmitted power level, $T_{RS}$, the pathloss estimation device **94** estimates the path loss, L, between the two stations **110, 112, step 43**. Additionally, a long term average of the pathloss, $L_0$, is updated, step **44**. The long term average of the pathloss, $L_0$, is an average of the pathloss estimates. In certain situations, instead of transmitting the transmitted power level, $T_{RS}$, the receiving station **110** may transmit a reference for the transmitted power level. In that case, the pathloss estimation device **94** provides reference levels for the pathloss, L.

Since TDD systems transmit downlink and uplink communications in the same frequency spectrum, the conditions these communications experience are similar. This phenomenon is referred to as reciprocity. Due to reciprocity, the path loss experienced for the downlink will also be experienced for the uplink and vice versa. By adding the estimated path loss to a target level, a transmission power level for a communication from the transmitting station **112** to the receiving station **110** is determined.

If a time delay exists between the estimated path loss and the transmitted communication, the path loss experienced by the transmitted communication may differ from the calculated loss. In TDD where communications are sent in differing time slots $36_1$-$36_n$, the time slot delay between received and transmitted communications may degrade the performance of an open loop power control system. To overcome these drawbacks, weighted open loop power control determines the quality of the estimated path loss using a quality measurement device **96**, **step 45**, and weights the estimated path loss accordingly, L, and long term average of the pathloss, $L_0$.

To enhance performance further in outer loop/weighted open loop, a target level is adjusted. A processor **103** converts the soft symbols produced by the data estimation device **90** to bits and extracts the target adjustment information, such as a $SIR_{TARGET}$ adjustment. A target update device **101** adjusts the target level using the target adjustments, step **46**. The target level may be a $SIR_{TARGET}$ or a target received power level at the receiving station **110**.

The transmit power calculation device **98** combines the adjusted target level with the weighted path loss estimate, L, and long term average of the pathloss estimate, $L_0$, to determine the transmission power level of the transmitting station, step **47**.

Data to be transmitted in a communication from the transmitting station **112** is produced by data generator **102**. The data is error detection/correction encoded by error detection/correction encoder **110**. The error encoded data is spread and time-multiplexed with a training sequence by the training sequence insertion device **104** in the appropriate time slots and codes of the assigned resource units producing a communication burst. The spread signal is amplified by an amplifier **106** and modulated by modulator **108** to radio frequency. The gain of the amplifier is controlled by the transmit power calculation device **98** to achieve the determined transmission power level. The power controlled communication burst is passed through the isolator **84** and radiated by the antenna **82**.

The following is one outer loop/weighted open loop power control algorithm. The transmitting stations's transmission power level in decibels, $P_{TS}$, is determined using **Equation 2**.

$$P_{TS} = SIR_{TARGET} + I_{RS} + \alpha(L-L_0) + L_0 + CONSTANT\ VALUE \qquad \text{Equation 2}$$

The $SIR_{TARGET}$ has an adjusted value based on the received target adjustment signals. For the downlink, the initial value of $SIR_{TARGET}$ is known at the transmitting station **112**. For uplink power control, $SIR_{TARGET}$ is signaled from the receiving station **110** to the transmitting station **112**. Additionally, a maximum and minimum value for an adjusted $SIR_{TARGET}$ may also be signaled. The adjusted $SIR_{TARGET}$ is limited to the maximum and minimum values. $I_{RS}$ is the measure of the interference power level at the receiving station **110**.

L is the path loss estimate in decibels, $T_{RS}$ - $R_{TS}$, for the most recent time slot $36_1$-$36_n$ that the path loss was estimated. $L_0$, the long term average of the path loss in decibels, is the running average of the pathloss estimate, L. The CONSTANT VALUE is a correction term. The CONSTANT VALUE corrects for differences in the uplink and downlink channels, such as to compensate for differences in uplink and downlink gain. Additionally, the CONSTANT VALUE may provide correction if the transmit power reference level of the receiving station is transmitted, instead of the actual transmit power, $T_{RS}$. If the receiving station **110** is a base station, the CONSTANT VALUE is preferably sent via a Layer 3 message.

The weighting value, $\alpha$, is a measure of the quality of the estimated path loss and is, preferably, based on the number of time slots $36_1$-$36_n$ between the time slot, n, of the last path loss estimate and the first time slot of the communication transmitted by the transmitting station **112**. The value of $\alpha$ is between zero and one. Generally, if the time difference between the time slots is small, the recent path loss estimate will be fairly accurate and $\alpha$ is set at a value close to one. By contrast, if the time difference is large, the path loss estimate may not be accurate and the long term average path loss measurement is most likely a better estimate for the path loss. Accordingly, $\alpha$ is set at a value closer to one.

**Equations 3** and **4** are equations for determining $\alpha$.

$$\alpha = 1 - (D - 1)/(D_{max}-1) \hspace{4cm} \text{Equation 3}$$

$$\alpha = \max \{1-(D-1)/(D_{max - allowed}-1), 0\} \hspace{3cm} \text{Equation 4}$$

The value, D, is the number of time slots $36_1$-$36_n$ between the time slot of the last path loss estimate and the first time slot of the transmitted communication which will be referred to as the time slot delay. If the delay is one time slot; $\alpha$ is one. $D_{max}$ is the maximum possible delay. A typical value for a frame having fifteen time slots is seven. If the delay is $D_{max}$, $\alpha$ is zero $D_{max-allowed}$ is the maximum allowed time slot delay for using open loop power control. If the delay exceeds $D_{max-allowed}$, open loop power control is effectively turned off by setting $\alpha = 0$. Using the transmit power level, $P_{TS}$, determined by a transmit power calculation device **98** the transmit power of the transmitted communication is set.

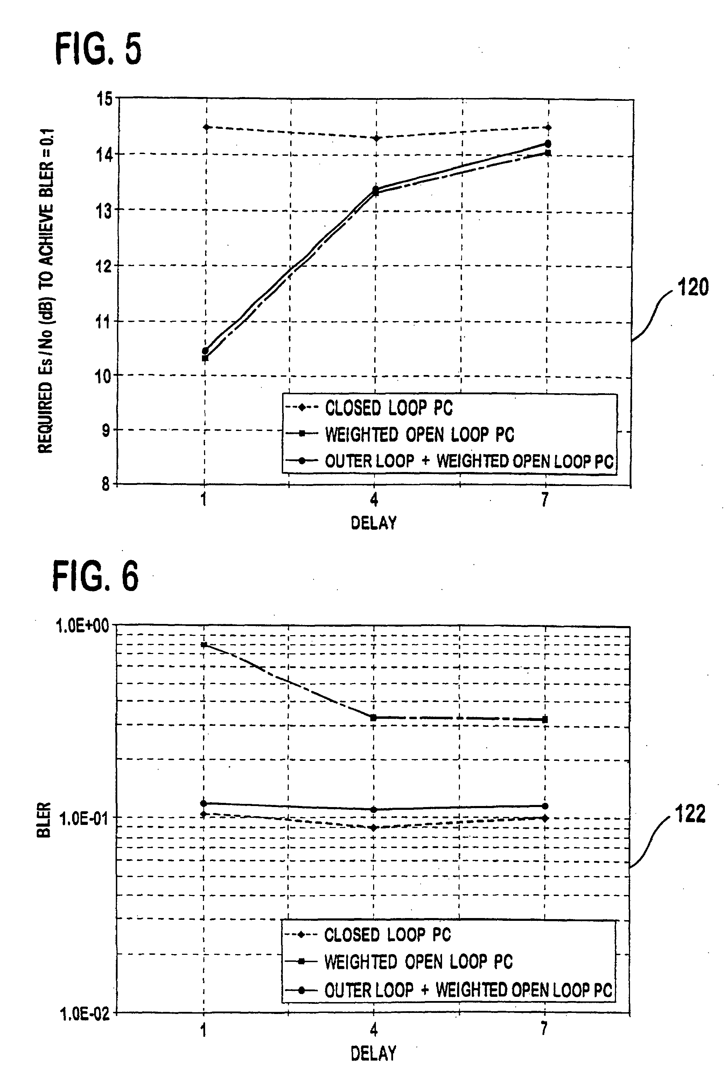

Figures 5 and 6 compare the performance of the weighted outer loop/open loop, open loop and closed loop systems. The simulations in **Figures 5** and **6** were performed for a slightly different version of the outer loop/weighted open loop algorithm. In this version, the target SIR is updated every block. A $SIR_{TARGET}$ is increased if a block error was detected and decreased if no block error was detected. The outer loop/weighted open loop system used **Equation 2. Equation 3** was used to calculate $\alpha$. The simulations compared the performance of the systems controlling a UE's $32_1$ transmission power level. For the simulations, 16 CRC bits were padded every block. In the simulation, each block was 4 frames. A block error was declared when at least two raw bit errors occur over a block. The uplink communication channel is assigned one time slot per frame. The target for the block error rate is 10%. The $SIR_{TARGET}$ is updated every 4 frames. The simulations address the performance of these systems for a UE $32_1$ traveling at 30 kilometers per hour. The simulated base station used two antenna diversity for reception with each antenna having a three finger RAKE receiver. The simulation approximated a realistic channel and SIR estimation based on a midamble sequence of burst type 1 field in the presence of additive white Gaussian noise (AWGN). The simulation used an International Telecommunication Union (ITU) Pedestrian B type channel and QPSK modulation. Interference levels were assumed to have no uncertainty. Channel coding schemes were not considered. $L_0$ was set at 0 db.

Graph **120** of **Figure 5** shows the performance as expected in terms of the required $E_S/N_O$ for a BLER of $10^{-1}$ as a function of time delay between the uplink time slot and the most recent downlink time slot. The delay is expressed by the number of time slots. $E_S$ is the energy of the complex symbol. **Figure 5** demonstrates that, when gain/interference uncertainties are ignored, the performance of the combined system is almost identical to that of weighted open loop system. The combined system outperforms the closed loop system for all delays.

In the presence of gain and interference uncertainties, the transmitted power level of the open loop system is either too high or too low of the nominal value. In graph **122** of **Figure 6**, a gain uncertainty of -2 dB was used. **Figure 6** shows the BLER as a function of the delay. The initial reference $SIR_{TARGET}$ for each system was set to its corresponding nominal value obtained from **Figure 5**, in order to achieve a BLER of $10^{-1}$. **Figure 6** shows that, in the presence of gain uncertainty, both the combined and closed loop systems achieve the desired BLER. The performance of the weighted open loop system severely degrades.

## Claims

1. A method for controlling transmission power levels in a spread spectrum time division duplex communication system having frames with time slots for communication, receiving at a first communication station communications from a second communication station and determining an error rate of the received communications (38, 39), producing target adjustments as needed based on in part the error rate (40), transmitting a first communication having a transmission power level in a first time slot and the target adjustments from the first communication station, receiving at the second communication station the target adjustments and the first communication and measuring a power level of the first communication as received (42, 46), determining a path loss estimate based on in part the measured received first communication power level (43), setting a transmission power level for a second communication in a second time slot from the second station to the first station based on in part a target level adjusted by the target adjustments (47), the method **characterized in that**:

the setting of a transmission power level for a second communication in a second time slot from the second station to the first station is further based on in part the path loss estimate weighted by a first factor and a long term pathloss average weighted by a second factor, wherein the first and second factors are a function of a time separation of the first and second time slots.

2. The method of claim 1 further **characterized in that** the target level is a target signal to interference ratio.

3. The method of claim 2 further **characterized in that** the adjustments to the target signal to interference ratio are limited to a maximum and minimum value.

4. The method of claim 2 further **characterized in that** each target adjustment is in a range of 0.25 decibels to 4 decibels.

5. The method of claim 2 further **characterized in that**:

a target adjustment increasing the target signal to interference ratio is $SIR_{INC}$;
a target adjustment decreasing the target signal to interference ratio is $SIR_{DEC}$;
a target block error rate is $BLER_{TARGET}$; and
$SIR_{DEC}$ is determined by

$$SIR_{DEC} = SIR_{INC} \times BLER_{TARGET} / (1-BLER_{TARGET}).$$

6. The method of claim 5 further **characterized in that** the $BLER_{TARGET}$ is in the range of 1% to 10%.

7. The method of claim 1 further **characterized in that**:

if the error rate exceeds an upper or is below a lower threshold, a target adjustment is transmitted; and
if the error rate is between the upper and lower threshold, no target adjustment is transmitted.

8. The method of claim 7 further **characterized in that** the target adjustments increasing the target level are transmitted as soon as an error count exceeds an upper threshold.

9. The method of claim 1 further **characterized by**:

determining a quality, $\alpha$, of the pathloss estimate (45) based on in part a number of time slots, D, between the first and second time slot; and
wherein the first factor is $\alpha$ and the second factor is $1-\alpha$.

10. The method of claim 9 further **characterized in that** a maximum time slot delay is $D_{max}$ and the determined quality, $\alpha$, is determined by

$$\alpha = 1 - (D-1)/(D_{max}-1).$$

11. The method of claim 9 further **characterized in that** a maximum allowed time slot delay is $D_{max-allowed}$ and the determined quality, $\alpha$, is determined by

$$\alpha = \max \{1- (D-1)/(D_{max-allowed} - 1),0\}.$$

**12.** The method of claim 1 further **characterized in that** the set transmission power level compensates for differences in uplink and downlink gains.

**13.** The method of claim 1 further **characterized in that** the first station is a base station and the second station is a user equipment.

**14.** The method of claim 1 further **characterized in that** the first station is a user equipment and the second station is a base station.

**15.** A spread spectrum time division duplex communication system having a first (110) and second (112) communication station, the system using frames with time slots for communication, the first station (110) receiving communications from the second communication station (112) and determining an error rate of the received communications, producing target adjustments as needed based on in part the error rate, and transmitting a first communication having a transmission power level in a first time slot and the target adjustments, the second station (112) receiving the target adjustments and the first communication and measuring a power level of the first communication as received, and determining a path loss estimate based on in part the measured received first communication power level, the second station (112) comprising means (110) for setting a transmission power level for a second communication in a second time slot from the second station to the first station based on in part a target level adjusted by the target adjustments, the system **characterized in that**:

the means (110) comprised in the second station (112) for setting a transmission power level for a second communication in a second time slot from the second station to the first station are further adapted for setting said transmission power level based on in part combining the path loss estimate weighted by a first factor and a long term pathloss average weighted by a second factor, wherein the first and second factors are a function of a time separation of the first and second time slots.

**16.** The system of claim 15 further **characterized in that** the target level is a target signal to interference ratio.

**17.** The system of claim 16 further **characterized in that** the adjustments to the target signal to interference ratio are limited to a maximum and minimum value.

**18.** The system of claim 15 further **characterized in that** each target adjustment is in a range of 0.25 decibels to 4 decibels.

**19.** The system of claim 15 further **characterized in that**:

if the error rate exceeds an upper or is below a lower threshold, a target adjustment is transmitted; and
if the error rate is between the upper and lower threshold, no target adjustment is transmitted.

**20.** The system of claim 19 further **characterized in that** the target adjustments increasing the target level are transmitted as soon as an error count exceeds an upper threshold.

**21.** The system of claim 15 further **characterized in that**:

the second station (112) further comprises means for determining a quality, $\alpha$, of the pathloss estimate based on in part a number of time slots, D, between the first and second time slot; and
the first factor is $\alpha$ and the second factor is 1-$\alpha$.

**22.** The system of claim 21 further **characterized in that** a maximum time slot delay is $D_{max}$ and the determined quality, $\alpha$, is determined by

$$\alpha = 1 - (D-1)/(D_{max} - 1).$$

**23.** The system of claim 21 further **characterized in that** a maximum allowed time slot delay is $D_{max-allowed}$ and the determined quality, $\alpha$, is determined by

$$\alpha = \max \{1-(D-1)/(D_{max-allowed} - 1), 0\}.$$

**24.** The system of claim 15 further **characterized in that** the set transmission power level compensates for differences in the uplink and downlink gains.

**25.** The system of claim 15 further **characterized in that** the first station (110) is a base station (30) and the second station (112) is a user equipment (32).

**26.** The system of claim 15 further **characterized in that** the first station (110) is a user equipment (32) and the second station (112) is a base station (30).

**Patentansprüche**

**1.** Verfahren zum Kontrollieren von Übertragungsleistungspegeln in einem Spreizspektrum-Zeitmultiplex-Duplex-Kommunikationssystem, wobei das System Rahmen mit Zeitschlitzen zur Kommunikation verwendet, umfassend ein Empfangen von Meldungen an einer ersten Kommunikanonsstation von einer zweiten Kommunikationsstation und Ermitteln einer Fehlerrate der empfangenen Meldungen (38,39), Erzeugen von erforderlichen Zielanpassungswerten auf Grundlage teilweise der Fehlerrate (40), Übertragen einer ersten Meldung mit einem Übertragungsleistungspegel in einem ersten Zeitschlitz sowie der Zielanpassungswerte von der ersten Kommunikationsstation, Empfangen der Zielanpassungswerte an der zweiten Kommunikationsstation und der ersten Meldung und Messen eines Leistungspegels der ersten Meldung bei deren Empfang (42, 46), Ermitteln einer Wegverlustschätzung auf Grundlage teilweise des gemessenen Leistungspegels (43) der empfangenen ersten Meldung, Festsetzen eines Übertragungsleistungspegels für eine zweite Meldung in einem zweiten Zeitschlitz von der zweiten Station in Richtung auf die erste Station auf Grundlage teilweise eines durch die Zielanpassungswerte (47) angepassten Zielpegels, das Verfahren **gekennzeichnet durch**:

das Festsetzen eines Übertragungsleistungspegels für eine zweite Meldung in einem zweiten Zeitschlitz von der zweiten Station in Richtung auf die erste Station auf Grundlage teilweise der Wegverlustschätzung gewichtet **durch** einen ersten Faktor und einer Langzeitwegverlustschätzung gewichtet **durch** einen zweiten Faktor, wobei der erste und der zweite Faktor eine Funktion eines Zeitabstandes zwischen dem ersten und dem zweiten Zeitschlitz darstellen.

**2.** Verfahren nach Anspruch 1, **dadurch gekennzeichnet, daß** der Zielpegel ein Ziel-Signal-Störungs-Verhältnis ist.

**3.** Verfahren nach Anspruch 2, **dadurch gekennzeichnet, daß** die Anpassungswerte zum Ziel-Signal-Störungs-Verhältnis zwischen einem maximalen und einem minimalen Wert begrenzt sind.

**4.** Verfahren nach Anspruch 2, **dadurch gekennzeichnet, daß** jeder Zielanpassungswert in einem Bereich zwischen 0,25 Dezibel bis 4 Dezibel liegt.

**5.** Verfahren nach Anspruch 2, **dadurch gekennzeichnet, daß**
ein das Ziel-Signal-Störungs-Verhältnis erhöhender Zielanpassungswert $SIR_{INC}$ ist;
ein das Ziel-Signal-Störungs-Verhältnis senkender Zielanpassungswert $SIR_{DEC}$ ist;
eine Ziel-Block-Fehlerrate $BLER_{TARGET}$ ist; und
$SIR_{DEC}$ durch folgende Gleichung bestimmt wird

$$SIR_{DEC} = SIR_{INC} \times BLER_{TARGET}/(1-BLER_{TARGET}).$$

**6.** Verfahren nach Anspruch 5, **dadurch gekennzeichnet, daß** $BLER_{TARGET}$ in einem Bereich zwischen 1 % und 10 % liegt.

**7.** Verfahren nach Anspruch 1, **dadurch gekennzeichnet, daß**
wenn die Fehlerrate einen oberen Schwellenwert überschreitet oder unter einem unteren Schwellenwert liegt, ein Zielanpassungswert übertragen wird; und
wenn die Fehlerrate zwischen dem oberen und unteren Schwellenwert liegt, kein Zielanpassungswert übertragen wird.

8. Verfahren nach Anspruch 7, **dadurch gekennzeichnet, daß** die den Zielpegel erhöhenden Zielanpassungswerte übertragen werden, sobald ein Fehlerergebnis einen oberen Schwellenwert überschreitet.

9. Verfahren nach Anspruch 1, des weiteren **gekennzeichnet durch**:

   Ermitteln einer Qualität ($\alpha$) der Wertverlustschätzung (45) auf Grundlage teilweise einer Zahl von Zeitschlitzen (D) zwischen dem ersten und dem zweiten Zeitschlitz; und

   wobei der erste Faktor $\alpha$ ist, und der zweite Faktor $1 - \alpha$ ist.

10. Verfahren nach Anspruch 9, **dadurch gekennzeichnet, daß** eine maximale Zeitschlitzverzögerung $D_{max}$ ist, und die ermittelte Qualität ($\alpha$) durch folgende Gleichung bestimmt wird

$$\alpha = 1 - (D - 1)/(D_{max} - 1).$$

11. Verfahren nach Anspruch 9, **dadurch gekennzeichnet, daß** eine maximal erlaubte Zeitschlitzverzögerung $D_{max\text{-}allowed}$ ist, und die ermittelte Qualität ($\alpha$) durch folgende Gleichung bestimmt wird

$$\alpha = max \{1 - (D - 1)/(D_{max\text{-}allowed} - 1), 0\}.$$

12. Verfahren nach Anspruch 1, **dadurch gekennzeichnet, daß** der festgesetzte Übertragungsleistungspegel Unterschiede im Uplink- und Downlink-Gain kompensiert.

13. Verfahren nach Anspruch 1, **dadurch gekennzeichnet, daß** die erste Station eine Basisstation ist, und die zweite Station eine Teilnehmereinheit ist.

14. Verfahren nach Anspruch 1, **dadurch gekennzeichnet, daß** die erste Station eine Teilnehmereinheit ist, und die zweite Station eine Basisstation ist.

15. Spreizspektrum-Zeitmultiplex-Duplex-Kommunikationssystem mit einer ersten (110) und einer zweiten (112) Kommunikationsstation, wobei das System Rahmen mit Zeitschlitzen zur Kommunikation verwendet, die erste Station (110) Meldungen von der zweiten Kommunikationsstation (112) empfängt und eine Fehlerrate der empfangenen Meldungen ermittelt, erforderliche Zielanpassungswerte auf Grundlage teilweise der Fehlerrate erzeugt, und eine erste Meldung mit einem Übertragungsleistungspegel in einem ersten Zeitschlitz sowie die Zielanpassungswerte überträgt, die zweite Station (112) die Zielanpassungswerte und die erste Meldung empfängt und einen Leistungspegel der ersten Meldung bei deren Empfang mißt, und eine Wegverlustschätzung auf Grundlage teilweise des gemessenen Leistungspegels der ersten Meldung ermittelt, die zweite Station (112) umfassend: Mittel (110) zum Festsetzen eines Übertragungsleistungspegels für eine zweite Meldung in einem zweiten Zeitschlitz von der zweiten Station in Richtung auf die erste Station auf Grundlage teilweise eines Zielpegels angepasst durch die Zielanpassungswerte, das System **gekennzeichnet durch**:

   Mittel (110) in der zweiten Station (112) zum Festsetzen eines Übertragungsleistungspegels für eine zweite Meldung in einem zweiten Zeitschlitz von der zweiten Station in Richtung auf die erste Station, ferner dazu eingerichtet, den Übertragungsleistungspegel auf Grundlage teilweise einer Kombination der Wegverlustschätzung gewichtet **durch** einen ersten Faktor und einer Langzeitwegverlustschätzung gewichtet **durch** einen zweiten Faktor festzusetzen, wobei der erste und der zweite Faktor eine Funktion eines Zeitabstandes zwischen dem ersten und dem zweiten Zeitschlitz darstellen.

16. System nach Anspruch 15, **dadurch gekennzeichnet, daß** der Zielpegel ein Ziel-Signal-Störungs-Verhältnis ist.

17. System nach Anspruch 16, **dadurch gekennzeichnet, daß** die Anpassungen zum Ziel-Signal-Störungs-Verhältnis zwischen einem maximalen und einem minimalen Wert begrenzt sind.

18. System nach Anspruch 15, **dadurch gekennzeichnet, daß** jeder Zielanpassungswert in einem Bereich zwischen 0,25 Dezibel bis 4 Dezibel liegt.

19. System nach Anspruch 15, **dadurch gekennzeichnet, daß**
wenn die Fehlerrate einen oberen Weit überschreitet oder unter einem unteren Wert liegt, ein Zielanpassungswert überträgt wird; und
wenn die Fehlerrate zwischen dem oberen und dem unteren Schwellenwert liegt, kein Zielanpassungswert überträgt wird.

20. System nach Anspruch 19, **dadurch gekennzeichnet, daß** die den Zielpegel erhöhenden Zielanpassungswerte übertragen werden, sobald ein Fehlerergebnis einen oberen Schwellenwert übersteigt.

21. System nach Anspruch 15, **dadurch gekennzeichnet, daß**
die zweite Station (112) des weiteren Mittel zum Ermitteln eine Qualität ($\alpha$) der Wegverlustschätzung auf Grundlage teilweise einer Zahl von Zeitschlitzen (D) zwischen dem ersten und dem zweiten Zeitschlitz aufweist; und der erste Faktor $\alpha$ ist, und der zweite Faktor $1 - \alpha$ ist.

22. System nach Anspruch 21, **dadurch gekennzeichnet, daß** eine maximale Zeitschlitzverzögerung $D_{max}$ ist, und die ermittelte Qualität ($\alpha$) aufgrund folgender Gleichung ermittelt wird

$$\alpha = 1 - (D-1)/(D_{max} - 1).$$

23. System nach Anspruch 21, **dadurch gekennzeichnet, daß** eine maximal erlaubte Zeitschlitzverzögerung $D_{max-allowed}$ ist, und die ermittelte Qualität ($\alpha$) durch folgende Gleichung bestimmt wird

$$\alpha = max \{1 - (D - 1) / (D_{max-allowed} - 1), 0\}.$$

24. System nach Anspruch 15, **dadurch gekennzeichnet, daß** der festgesetzte Übertragungsleistungspegel Unterschiede im Uplink- und Downlink-Gain kompensiert.

25. System nach Anspruch 15, **dadurch gekennzeichnet, daß** die erste Station (110) eine Basisstation (30) ist, und die zweite Station (112) eine Teilnehmereinheit (32) ist.

26. System nach Anspruch 15, **dadurch gekennzeichnet, dass** die erste Station (110) eine Teilnehmereinheit (32) ist, und die zweite Station (112) eine Basisstation (30) ist.

**Revendications**

1. Procédé permettant de commander des niveaux de puissance de transmissions dans un système de communication en duplex à répartition dans le temps et étalement du spectre ayant des trames comprenant des intervalles de temps destinées aux communications, recevant au niveau d'une première station de communication des communications provenant d'une deuxième station de communication et déterminant un taux d'erreur des communications reçues (38, 39), produisant des ajustements de cible, le cas échéant, en partie sur la base du taux d'erreur (40), transmettant une première communication ayant un niveau de puissance de transmission dans un premier intervalle de temps et les ajustements de cible en provenance de la première station de communication, recevant au niveau de la deuxième station de communication les ajustements de cible et la première communication et mesurant un niveau de puissance de la première communication reçue (42, 46), déterminant une estimation de l'affaiblissement de propagation en partie sur la base du niveau de puissance mesuré (43) de la première communication reçue, fixant un niveau de puissance de transmission pour une deuxième communication dans un deuxième intervalle de temps de la deuxième station à la première station, en partie sur la base d'un niveau cible ajusté par les ajustements de cible (47), le procédé étant **caractérisé en ce que** :

la fixation d'un niveau de puissance de transmission pour une deuxième communication dans un deuxième intervalle de temps de la deuxième station à la première station est également en partie basée sur l'estimation de l'affaiblissement de propagation pondérée par un premier facteur et une estimation de l'affaiblissement de propagation à long terme, pondérée par un deuxième facteur, les premier et deuxième facteurs étant fonction d'un espacement temporel des premier et deuxième intervalles de temps.

2. Procédé selon la revendication 1, **caractérisé en outre en ce que** le niveau cible est un rapport du signal cible sur les interférences.

3. Procédé selon la revendication 2, **caractérisé en outre en ce que** les ajustements du rapport du signal cible sur les interférences sont limités à une valeur maximale et minimale.

4. Procédé selon la revendication 2, **caractérisé en ce que** chaque ajustement de cible se trouve dans un éventail compris entre 0,25 décibel et 4 décibels.

5. Procédé selon la revendication 2, **caractérisé en outre en ce que** :

un ajustement de cible augmentant le rapport du signal cible sur les interférences est $SIR_{INC}$ ;

un ajustement de cible réduisant le rapport du signal cible sur les interférences est $SIR_{DEC}$ ;

un taux d'erreur du bloc cible est $BLER_{TARGET}$ ; et

$SIR_{DEC}$ est déterminé par :

$$SIR_{DEC} = SIR_{INC} \times BLER_{TARGET}/(1-BLER_{TARGET}).$$

6. Procédé selon la revendication 5, **caractérisé en ce que** $BLER_{TARGET}$ se trouve dans l'éventail compris entre 1 % et 10 %.

7. Procédé selon la revendication 1, **caractérisé en outre en ce que** :

si le taux d'erreur dépasse un seuil supérieur ou est en dessous d'un seuil inférieur, un ajustement de cible est transmis ; et

si le taux d'erreur est compris entre le seuil supérieur et le seuil inférieur, aucun ajustement de cible n'est transmis.

8. Procédé selon la revendication 7, **caractérisé en outre en ce que** les ajustements de cible augmentant le niveau cible sont transmis dès qu'un comptage d'erreur dépasse un seuil supérieur.

9. Procédé selon la revendication 1, **caractérisé en outre par** :

la détermination d'une qualité, $\alpha$, de l'estimation de l'affaiblissement de propagation (45) en partie sur la base d'un certain nombre d'intervalles de temps, D, entre le premier et le deuxième intervalles de temps ; et

dans lequel le premier facteur est $\alpha$ et le deuxième facteur est $1-\alpha$.

10. Procédé selon la revendication 9, **caractérisé en outre en ce qu'**un retard d' intervalle maximum de temps est $D_{max}$ et **en ce que** la qualité déterminée $\alpha$ est déterminée par

$$\alpha = 1 - (D-1)/(D_{max}-1).$$

11. Procédé selon la revendication 9, **caractérisé en outre en ce qu'**un retard d'intervalle de temps maximum permis est $D_{max-allowed}$ et **en ce que** la qualité déterminée, $\alpha$, est déterminée par :

$$\alpha = \max\{1-(D-1)/(D_{max-allowed}-1),0\}.$$

12. Procédé selon la revendication 1, **caractérisé en outre en ce que** le niveau de puissance de transmission fixé compense les différences de gain de liaison montante et descendante.

13. Procédé selon la revendication 1, **caractérisé en outre en ce que** la première station est une station de base et **en ce que** la deuxième station est un équipement d'utilisateur.

14. Procédé selon la revendication 1, **caractérisé en outre en ce que** la première station est un équipement d'utilisateur et **en ce que** la deuxième station est une station de base.

15. Système de communication en duplex à répartition dans le temps et étalement du spectre ayant une première (110) et une deuxième (112) stations de communication, le système utilisant des trames comprenant des intervalles de temps destinés aux communications, la première station (110) recevant des communications provenant de la deuxième station de communication (112) et déterminant un taux d'erreur des communications reçues, produisant des ajustements de cible, le cas échéant, en partie sur la base du taux d'erreur et transmettant une première communication ayant un niveau de puissance de transmission dans un premier intervalle de temps et les ajustements de cible, la deuxième station (112) recevant les ajustements de cible et la première communication et mesurant un niveau de puissance de la première communication reçue, et déterminant une estimation de l'affaiblissement de propagation en partie sur la base du niveau de puissance mesuré de la première communication reçue, la deuxième station (112) comprenant des moyens (110) permettant de fixer un niveau de puissance de transmission pour une deuxième communication dans un deuxième intervalle de temps de la deuxième station à la première station, en partie sur la base d'un niveau cible ajusté par les ajustements de cible, le système étant **caractérisé en ce que** :

les moyens (110) compris dans une deuxième station (112) permettant de fixer un niveau de puissance de transmission pour une deuxième communication dans un deuxième intervalle de temps de la deuxième station à la première station sont de plus adaptés pour fixer ledit niveau de puissance de transmission en partie sur la base de l'estimation de l'affaiblissement de propagation pondérée par un premier facteur combinée avec une estimation de l'affaiblissement de propagation à long terme, pondérée par un deuxième facteur, les premier et deuxième facteurs étant fonction d'un espacement temporel des premier et deuxième intervalles de temps.

16. Système selon la revendication 15, **caractérisé en outre en ce que** le niveau cible est un rapport du signal cible sur les interférences.

17. Système selon la revendication 16, **caractérisé en outre en ce que** les ajustements du rapport du signal cible sur les interférences sont limités à une valeur maximale et minimale.

18. Système selon la revendication 15, **caractérisé en outre en ce que** chaque ajustement de cible se trouve dans un éventail compris entre 0,25 décibel et 4 décibels.

19. Système selon la revendication 15, **caractérisé en outre en ce que** :

si le taux d'erreur dépasse un seuil supérieur ou est en dessous d'un seuil inférieur, un ajustement de cible est transmis ; et

si le taux d'erreur est compris entre le seuil supérieur et le seuil inférieur, aucun ajustement de cible n'est transmis.

20. Système selon la revendication 19, **caractérisé en outre en ce que** les ajustements de cible augmentant le niveau cible sont transmis dès qu'un comptage d'erreur dépasse un seuil supérieur.

21. Système selon la revendication 15, **caractérisé en outre en ce que** :

la deuxième station (112) comprend en outre des moyens permettant de déterminer une qualité, $\alpha$, de l'estimation de l'affaiblissement de propagation en partie sur la base d'un certain nombre d'intervalles de temps, D, entre le premier et le deuxième intervalles de temps ; et

le premier facteur est $\alpha$ et le deuxième facteur est 1-$\alpha$.

22. Système selon la revendication 21, **caractérisé en outre en ce qu'**un retard d'intervalle maximum de temps est

$D_{max}$ et **en ce que** la qualité déterminée $\alpha$ est déterminée par

$$\alpha = 1 - (D-1)/(D_{max}-1).$$

23. Système selon la revendication 21, **caractérisé en outre en ce qu'**un retard d'intervalle de temps maximum permis est $D_{max-allowed}$ et **en ce que** la qualité déterminée, $\alpha$, est déterminée par :

$$\alpha = \max \{1-(D-1)/(D_{max-allowed}-1),0\}.$$

24. Système selon la revendication 15, **caractérisé en outre en ce que** le niveau de puissance de transmission fixé compense les différences de gain de liaison montante et descendante.

25. Système selon la revendication 15, **caractérisé en outre en ce que** la première station (110) est une station de base (30) et **en ce que** la deuxième station (112) est un équipement d'utilisateur (32).

26. Système selon la revendication 15, **caractérisé en outre en ce que** la première station (110) est un équipement d'utilisateur (32) et **en ce que** la deuxième station (112) est une station de base (30).

FIG. 1

EP 1 163 735 B1

## FIG. 2

$36_1$ | $36_2$ | • • • | $36_n$ | $36_1$ | $36_2$ | • • • | $36_n$ | $36_1$ | $36_2$ | • • • | $36_n$ | • • •

34   34   34

TIME

# FIG. 3

RECEIVING STATION RECEIVES A COMMUNICATION FROM THE TRANSMITTING STATION — 38

DETERMINING AN ERROR RATE ASSOCIATED WITH THE COMMUNICATION FROM THE TRANSMITTING STATION — 39

DETERMINING IF AN ADJUSTMENT IN A TARGET LEVEL IS NEEDED AND DETERMINE THE ADJUSTMENT LEVEL — 40

TRANSMITTING TARGET ADJUSTMENTS AS NEEDED AND A COMMUNICATION TO THE TRANSMITTING STATION — 41

DETERMINING THE RECEIVED POWER LEVEL OF THE COMMUNICATION FROM THE RECEIVING STATION AS RECEIVED AT THE TRANSMITTING STATION — 42

DETERMINE AN ESTIMATED PATH LOSS BETWEEN THE RECEIVING AND TRANSMITTING STATION BY SUBTRACTING THE RECEIVED COMMUNICATION'S POWER LEVEL IN dB FROM THE COMMUNICATION'S TRANSMISSION POWER LEVEL IN dB — 43

UPDATE A LONG TERM PATH LOSS ESTIMATE — 44

DETERMINE THE QUALITY OF THE ESTIMATED PATH LOSS — 45

RECEIVING THE TARGET ADJUSTMENT SIGNAL AND ADJUSTING THE TARGET LEVEL — 46

SET THE TRANSMITTING STATION'S TRANSMISSION POWER LEVEL USING THE ESTIMATED PATH LOSS AND LONG TERM AVERAGE OF THE PATH LOSS WEIGHTED BY THE ESTIMATE'S QUALITY AND THE RECEIVED TARGET ADJUSTMENTS — 47

FIG. 4

## FIG. 5

Graph 120: REQUIRED Es/No (dB) TO ACHIEVE BLER = 0.1 vs DELAY

Legend:
- ◆-- CLOSED LOOP PC
- ■— WEIGHTED OPEN LOOP PC
- ●— OUTER LOOP + WEIGHTED OPEN LOOP PC

## FIG. 6

Graph 122: BLER vs DELAY

Legend:
- ◆-- CLOSED LOOP PC
- ■— WEIGHTED OPEN LOOP PC
- ●— OUTER LOOP + WEIGHTED OPEN LOOP PC